(19) **Europäisches Patentamt / European Patent Office / Office européen des brevets**

(11) **EP 1 777 942 B1**

(12) ## EUROPEAN PATENT SPECIFICATION

(45) Date of publication and mention
of the grant of the patent:
**21.03.2012 Bulletin 2012/12**

(51) Int Cl.:
**H04N 5/225** (2006.01)

(21) Application number: **06255374.8**

(22) Date of filing: **19.10.2006**

(54) **End-to-end design of electronic imaging systems using backwards ray tracing from the detector to the source**

Durchgehender Entwurf eines elektronischen Bildaufnahmesystems unter Benutzung von Rückwärtsstrahlverfolgung vom Detektor zur Quelle

Design de bout en bout de systèmes électro-optiques pour la formation d'images

(84) Designated Contracting States:
**DE GB**

(30) Priority: **20.10.2005 US 256563**

(43) Date of publication of application:
**25.04.2007 Bulletin 2007/17**

(73) Proprietor: **Ricoh Company, Ltd.**
**Tokyo 143-8555 (JP)**

(72) Inventor: **Stork, David G.**
**c/o Ricoh Innovations, Inc.**
**Menlo Park, CA 94025-7022 (US)**

(74) Representative: **Leeming, John Gerard**
**J.A. Kemp & Co.**
**14 South Square**
**Gray's Inn**
**London WC1R 5JJ (GB)**

(56) References cited:
**US-A1- 2003 169 944     US-A1- 2005 197 809**

**Description**

BACKGROUND OF THE INVENTION

1. Field of the Invention

The present invention relates generally to the design of electro-optic imaging systems, and more particularly, to the "end-to-end" design of these systems based in part on simulating the optical subsystem by ray tracing from the detector back to the source.

2. Description of the Related Art

Electro-optic imaging systems typically include an optical subsystem (e.g., a lens assembly), an electronic detector subsystem (e.g., CCD detector array) and a digital image processing subsystem (e.g., typically implemented in dedicated chips or software). Traditional methods for designing these systems generally involve two discrete stages. First, the optical subsystem is designed with the goal of forming a high quality intermediate optical image of the source (subject to cost, physical and other non-imaging constraints). Next, after the optical subsystem has been designed, the digital image processing subsystem is designed to compensate for remaining defects in the sampled optical image.

The two design stages typically occur with very little coordination between the optical designer and the image processing designer. The separation of these stages is a reflection of the significant differences between the fields of optics and image processing in their methods, tools, goals and constraints. For example, each field covers a large swath of potential applications but there typically is little overlap between the two fields other than the design of electro-optic imaging systems. The design of conventional microscopes, telescopes, eyeglasses, etc. typically does not consider any significant image processing. Likewise, areas of image processing such as compression, computer graphics, and image enhancement typically do not involve any significant optics. As a result, each field has evolved independently of the other and with its own unique terminology, fundamental science, best practices, and set of tools. In general, the familiarity required to master each of these domains hinders a unified perspective to designing electro-optic imaging systems. One important challenge to a unified perspective is the lack of a common language with which to describe the problems and approaches between the two distinct fields. One prominent example can be seen in the thinking about the fundamental conceptual elements associated with each field. Optical designers deal with rays of light and passive optical elements whereas image processors deal with bytes of information and active algorithms. The laws and constraints governing these two fundamental classes of entities differ in numerous ways.

One drawback to the traditional design approach just outlined is that synergies between the optical subsystem and the digital image processing subsystem are often overlooked. The optical designer creates the "best" optical subsystem without knowledge of the digital image processing subsystem. The image processor creates the "best" digital image processing subsystem without the ability to modify the previously designed optical subsystem. These subsystems are then concatenated to form the electro-optic imaging system. The concatenation of two independently designed "best" subsystems may not yield the "best" overall system. There may be unwanted interactions between the two independently designed subsystems and potential synergies between the two subsystems may go unrealized.

Another drawback to the traditional design approach is that information about the source may not be fully utilized in the design process. For example, complex three-dimensional models of the source, such as may be generated in connection with computer graphics, typically cannot be utilized by traditional optical design software. As another example, traditional optical design software typically also cannot take advantage of statistical models of variations in the source. This drawback can be especially severe for special purpose electro-optic imaging systems where the intended class of sources has special optical properties, or where the output is not an image but instead a symbolic representation of the source, for instance a barcode number.

Thus, there is a need for design approaches based on an end-to-end design of the electro-optic imaging system, especially where the entire electro-optical system is considered as a whole and information about the source is incorporated into the design process.

US 2005/0197809 A1 discloses a system for optimizing optical and/or digital system designs. An optical model of the optical system design is generated. A digital model of the digital system design is generated. Simulated output of the optical and digital models is analyzed to produce a score. The score is processed to determine whether the simulated output achieves one or more goals. One or more properties of at least one of the optical model and the digital model is modified if the goals are not achieved. The analyzing, processing and modifying is repeated until the goals are achieved, and an optimized optical system design and optimized digital system design are generated from the optical and digital models.

US 2003/0169944 A1 discloses an image processing method including the steps of wavefront coding a wavefront that forms an optical image, converting the optical image to a data stream, and processing the data stream with a filter kernel to reverse effects of wavefront coding and generate a final image. For example, the filter set kernel may be a reduced filter set kernel, or a color-specific kernel. Methods and systems are also disclosed for processing color images, such as by separating color and spatial information into separate channels. Methods and systems herein are for example useful in forming electronic devices with reduced opto-mechanical, opto-electronic and processing complexity or cost.

## SUMMARY OF THE INVENTION

The scope of the invention is defined in the appended claims.

The present invention overcomes the limitations of the prior art by providing a unified design strategy that takes into account different subsystems within the overall electro-optic imaging system. In one implementation, the design methodology predicts end-to-end imaging performance using models for the source, the optical subsystem, the detector subsystem and the digital image processing subsystem. The optical subsystem is then designed taking into account these other subsystems. For example, the optical subsystem may be designed based on a post-processing performance metric that takes into account the effects of the image processing. Unlike in conventional approaches, the intermediate optical image produced by the optical subsystem is not required to be high image quality since, for example, the image may be subsequently improved by the digital image processing subsystem.

The design approach includes modeling the propagation of signal from the source through the optical subsystem, the detector subsystem and the digital image processing subsystem. This modeling includes tracing rays from the detector subsystem backwards through the optical subsystem to the source and then modeling propagation of the signal from the source to the detector subsystem based on the backwards ray trace and on a spatial (and/or temporal) model of the source.

For example, assume that the detector subsystem includes an array of detectors, with each detector producing a pixel of an image. In one implementation, the pixel signal at a specific detector is estimated by tracing rays from the detector cell backwards through the optical subsystem to the source. The points where the backwards traced rays intersect various source objects are referred to as source points, and the source points are modeled as making contributions to the pixel. The overall pixel signal is estimated by combining the contributions from the different source points. For example, if some of the backwards traced rays from a detector intersect light source 1, other rays reflect off a mirror to light source 2, and the remaining rays intersect light source 3, then the pixel produced by that detector can be estimated as a combination of the contributions from the three light sources.

The intersection of the backwards traced rays and the source will depend in part on the spatial model of the source. The specifics of the spatial model will depend on the particular application. For example, the spatial model can be three-dimensional. In one implementation, the three-dimensional model is computer-generated. The model could also be statistical in nature. The spatial model can also account for different variations, such as variations due to motion of the source, variations in a position of the source, variations in illumination of the source and noise variations.

Propagation through the digital image processing subsystem will depend in part on the design space (i.e., the type of digital image processing being implemented). For example, the design space can be limited to digital image processing subsystems that restore degradation caused by the point spread function of the optical subsystem and/or the detector subsystem. It can also be limited to linear techniques or certain classes of linear techniques. Linear techniques are more likely to have a closed form solution or other solutions that are well behaved and that can be calculated in an efficient manner. However, the invention is not limited to just linear techniques.

The post-processing performance metric will also vary by application. A preferred digital image performance metric is the mean square error between an ideal image of the source and the image produced by propagation of signal from the source through the electro-optic imaging system. For applications where the end goal is some sort of recognition (e.g., character recognition or barcode reading), the post-processing performance metric may be a measure of the accuracy of recognition, for example the error rate, rate of false positives, etc.

One advantage of this approach is that the resulting electro-optic imaging system may achieve the same system performance as a traditionally designed system, but possibly with fewer components, smaller "footprint" (spatial extent), lower cost, faster development time or less sensitivity (e.g., to manufacturing or environmental variations). This is because the intermediate optical image is not required to be of high image quality, thus opening up new areas in the design space. In these designs, the overall system performance may be the same or better than that of a traditionally designed system, even though the optical subsystem may form an intermediate optical image that is significantly worse in image quality than that formed by the traditionally designed optical subsystem. In these new designs, the optical subsystem may introduce significant aberrations in the intermediate optical image so long as these are adequately corrected by the digital image processing subsystem.

Other aspects of the invention include software and tools to implement the design methods described above, and devices, systems and subsystems created by this design approach.

Other objects, features and advantages of the present invention will become more apparent from the following detailed description when read in conjunction with the accompanying drawings.

BRIEF DESCRIPTION OF THE DRAWINGS

FIG. 1 is a block diagram illustrating the problem of designing an electro-optic imaging system.
FIG. 2 is a flow diagram illustrating a method for designing an electro-optic imaging system according to the present invention.
FIG. 3 is a diagram illustrating backwards ray tracing according to the invention.
FIGS. 4A-4G are simulated images of the situation shown in FIG. 3.
FIGS. 5A-5B are simulated images of a barcode tipped at different angles.

DETAILED DESCRIPTION OF THE PREFERRED EMBODIMENTS

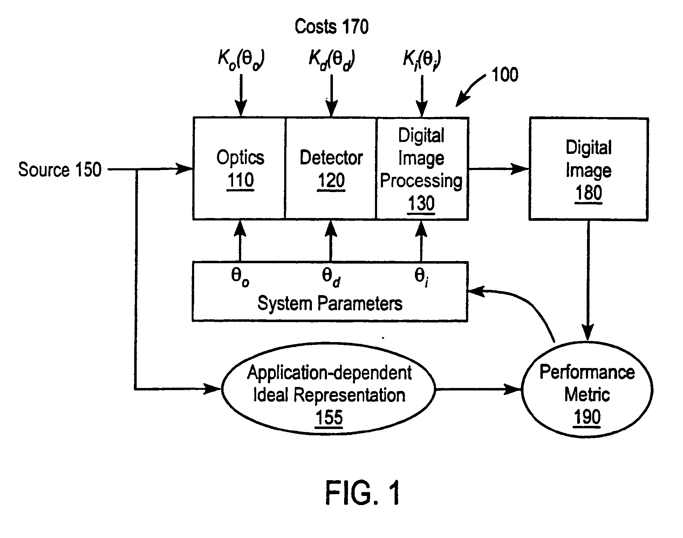

FIG. 1 is a block diagram illustrating the problem of designing an electro-optic imaging system 100. The imaging system 100 includes an optical subsystem 110, detector subsystem 120 and digital image processing subsystem 130. The imaging system 100 is intended to image a source 150 and produces digital image 180. The general design problem is to design the imaging system 100 to "optimize" its overall performance, subject to certain constraints. In many cases, the goal of optimization is to produce a digital image 180 which matches the application-specific idealized version 155 of the input source.

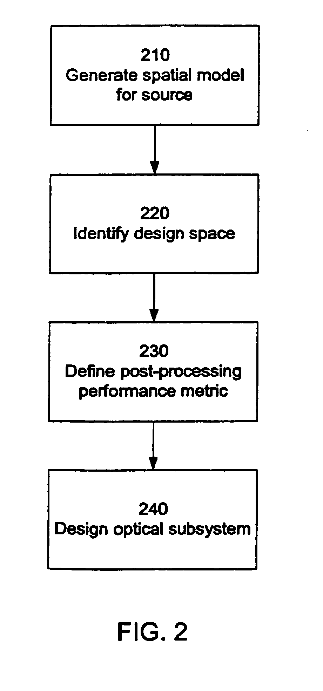

FIGS. 1 and 2 illustrate an example method for designing an electro-optic imaging system 100 according to the present invention. Referring to FIG. 2, the design method includes generating 210 a spatial model of the source 150. The spatial model of the source may be derived for a specific situation, empirically measured, based on previously developed models or otherwise provided. Illumination, radiometry and geometry are factors that may be included in the source model. The spatial model may have a statistical aspect to account for variations in the source, for example variations due to motion of the source, variations in a position of the source, variations in illumination or noise variations. Further examples will be described below.

The design space for the electro-optic imaging system is also defined 220. In FIG. 1, each of the subsystems is defined by its parameters $\theta_o$, $\theta_d$ and $\theta_i$, respectively. For example, the design space for the optical subsystem 110, described by the vector $\theta_o$, may be defined by number, type and size of lenses, radii of curvature, stops, etc. The design space for the detector subsystem 120, described by the vector $\theta_d$, may parameterize the number of pixels, detector spacing, fill factor, bandwidth, pixel geometry, etc. The design space for the digital image processing subsystem 130, described by the vector $\theta_i$, may identify the type(s) of digital image processing to be applied and parameters for that type of processing (e.g., linear or nonlinear filters, number of taps, tap weights, etc). Various non-imaging constraints or costs 170 associated with the designs may also be defined. The size of the design space of each subsystem will vary depending on the application. In some cases, there may be much latitude in designing a subsystem. In other cases, the design of the subsystem may be tightly constrained or even pre-defined (e.g., if the detector array is selected a priori).

A post-processing performance metric 190 is also defined 230. The performance metric is post-processing in the sense that it is based on performance after image processing rather than before image processing. For examples, measures of the wavefront error or spot size of the intermediate optical image produced by the optical subsystem alone may be conventional error metrics for the optical subsystem but they are not post-processing performance metrics. In FIG. 1, the post-processing performance metric 190 is based on a comparison of the digital image 180 produced by the imaging system 100 compared to the ideal digital image 155.

In many design situations, the image 180 produced by the system is calculated by modeling propagation of the source characteristics 150 through the subsystems 110, 120 and 130. In this particular case, propagation is modeled based on tracing rays from the detector subsystem 120 (e.g., from pixels of a detector array) backwards through the optical subsystem 110 to the source 150. The backwards ray trace and the spatial model of the source are used to model forward propagation of signal from the source 150 through the optical subsystem 110 to the detector subsystem 120, as will be described in further detail below.

The design step 240 can be described as selecting a design within the design space that optimizes the post-processing performance metric 190, possibly subject to certain constraints (e.g., limits on certain costs 170). The optical subsystem 110 and the digital image processing subsystem 130 preferably are designed together, rather than sequentially as is the case in conventional design approaches. Mathematically, using the notation of FIG. 1, the design step can be described as selecting the system parameters $\theta_o$, $\theta_d$ and $\theta_i$ to directly optimize the performance metric, possibly subject to certain constraints on the costs 170. For example, an image-based post-processing performance metric 190 may be optimized subject to a maximum financial cost. Alternately, the financial cost may be minimized subject to some minimum acceptable post-processing performance metric 190 for the digital image 180.

A number of optimization algorithms can be used. For some linear cases, parameters may be solved for analytically or using known and well-behaved numerical methods. For more complicated cases, including certain nonlinear cases, techniques such as expectation maximization, gradient descent and linear programming can be used to search the design space.

Note that in both FIGS. 1 and 2, there is no requirement for the optical subsystem 110, the detector subsystem 120 or the digital image processing subsystem 130, taken alone, to be optimal. It is quite possible for these subsystems to exhibit less than optimal performance when considered alone, while the overall electro-optic imaging system 100 still exhibits good or even optimal performance. This is in direct contrast to conventional design methods where, for example, the optical subsystem 110 typically is designed by directly optimizing the image quality of the intermediate optical image formed by it. For example, the optical subsystem 110 may be designed based directly on minimizing the RMS wavefront error or the RMS spot size. In contrast, for the design approach of FIG. 2, the intermediate optical image formed by the optical subsystem 110 may have worse image quality (e.g., as measured by wavefront error or spot size), which is then corrected by the digital image processing subsystem 130. The optical subsystem 110 is not designed based directly on improving the image quality of the intermediate optical image. Rather, it is designed based directly on improving the post-processing performance metric 190. The optical subsystem 110 preferably is designed jointly with the digital image processing subsystem 130, based directly on optimizing the post-processing performance metric 190.

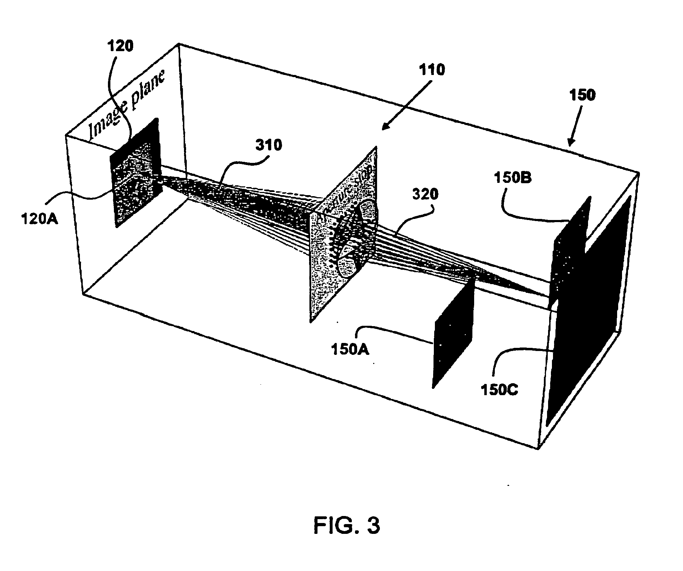

FIG. 3 provides further descriptions of examples of models of the source 150, optical subsystem 110, detector subsystem 120 and digital image processing subsystem 130. One specific model (but not the only model) is described. For each subsystem, important conceptual elements are described as well as the simplifying modeling assumptions that are used in later simulations.

FIG. 3 shows one approach for simulating propagation of signal from the source 150 through the optical subsystem 110 to the detector subsystem 120. In this example, the optical subsystem 110 is shown as a single lens with a square aperture, and the detector subsystem 120 is a square detector array. The source 150 includes a red square 150A and a green square 150B at different positions and depths, with a large distant blue background 150C. In a physical system, the source objects 150 would generate light, which would pass through the lens and aperture stop onto the image plane, for instance a CCD sensor array.

In this approach, however, rays are traced in the backwards direction from the detector array 120 to the source 150. The detector array 120 includes an array of detectors, and one or more detectors in the array are used to produce each pixel of the captured image. In some detector arrays, one detector is used to produce each pixel. In other detector arrays, multiple detectors (e.g., separate red, green and blue detectors) are used to produce each pixel. Regardless of the array geometry, rays are traced from the detector(s) corresponding to a pixel backwards through the optical subsystem 110 to the source 150. The pixel (e.g., its color and brightness) is then estimated based on the backwards ray trace and the spatial model of the source.

FIG. 3 shows a pixel towards the center of the image plane being backwards ray traced. The detector 120A is the element that generates the pixel in question. Rays 310 originate from the detector 120A and are ray traced backwards through the aperture stop and lens 110 and onward to the source 150. Some of the rays hit the red square 150A, some hit the green square 150B and some hit the blue background 150C. Each source point intersected by each ray makes a contribution to the overall pixel produced by the detector 120A. These image contributions are combined to estimate the overall pixel. In one approach, the relative proportion of the rays that intersect each of the source objects 150A-150C determines the "color" that the detector 120A sees and the pixel is estimated by forming a weighted average of the image contributions from the rays. In short, this approach "works backwards" from the flow of light in the spatial model of the source, plus the optical subsystem. The same process is repeated for each pixel. In this way, the entire captured image can be estimated.

In FIG. 3, each ray that is traced backwards from detector 120A results in a single point of intersection with a source object 150. None of the rays split into multiple rays as part of the backwards ray trace. This is done to simplify FIG. 3 but is not required. For example, if a backwards traced ray hits a diffuse surface, it may be split into multiple rays, each of which is further backwards ray traced. The multiple rays account for the diffuse nature of the surface.

The image estimated based on the backward ray trace can then be used as input to the digital image processing subsystem 130. The parameters $\theta_i$ for the digital image processing subsystem 130 can be designed based on the estimated image in comparison to the ideal image 155. In one approach, a set of different sources (e.g., a set of barcodes) are used to produce a set of backwards ray traced images, with corresponding ideal images. These two sets can then be used to generate statistical models, from which the parameters $\theta_i$ for the digital image processing subsystem 130 can be determined. Once the parameters $\theta_i$ are determined, the image based on backwards ray tracing can be propagated through the digital image processing subsystem 130 to produce the digital image 180. Comparison to the ideal image 155 yields the performance metric 190 for this particular trial design of optical subsystem 110 and digital image processing subsystem 130. This process can be iterated to design an optical subsystem 110 that optimizes the performance metric 190.

In more detail, the backwards ray bundle originating from each detector can have different distributions. Each detector occupies a finite area and subtends a finite solid angle relative to the exit aperture of the optical subsystem 110. In one approach, rays are distributed evenly across this area and solid angle but they may be weighted differently.

For example, rays that strike the detector at a near-normal angle may be weighted more heavily than those that strike at a steeper angle. In an alternate approach, all rays are given equal weighting but they are unevenly distributed across the detector area and solid angle. For example, there may be a denser ray distribution near normal compared to at steeper angles.

The image contribution from each intersected source point can also be determined in different ways. The image contribution preferably accounts for the directionality of the source (e.g., if the source has a Lambertian distribution oriented in a certain direction) as well as the source color and intensity (including intensity falloff with distance).

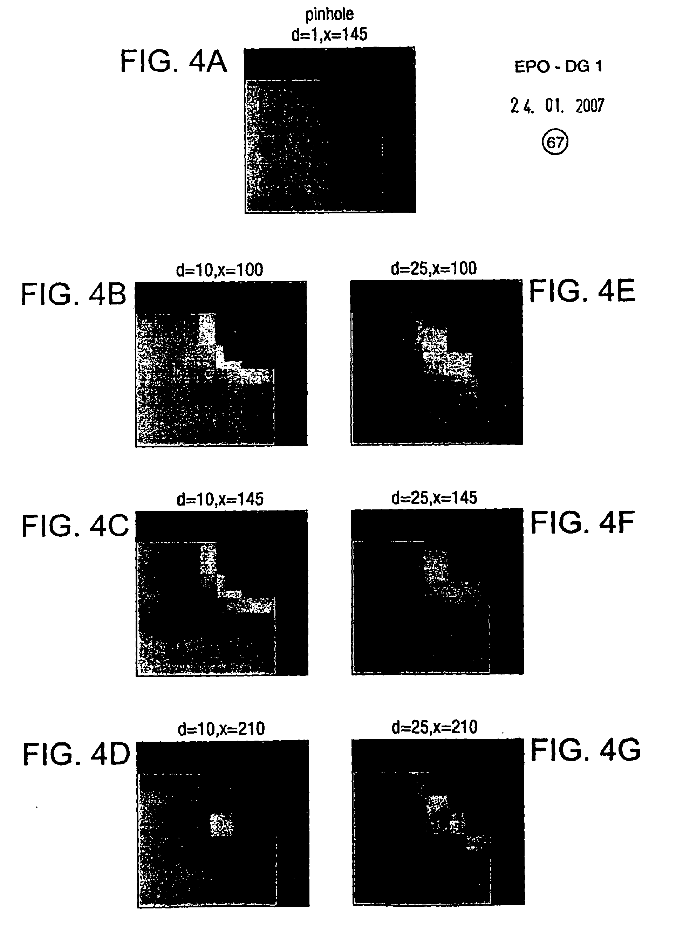

FIGS. 4A-4G show the results of an experiment in which the situation shown in FIG. 3 was simulated for various values of the aperture diameter and location of the aperture. In these figures, d is the diameter of the aperture stop and x determines the location of the aperture stop. The relative positions of the source objects 150A-150C, lens 110 and detector 120 are the same for all FIGS. 4A-4G. Only the aperture stop varies in position. The coordinate x=0 occurs at the image plane 120. The lens 110 is located at x=150. In FIGS. 4A, 4C and 4F, the stop is located at x=145 which is close to the lens, approximately as shown in FIG. 3. In FIGS. 4B and 4E, the stop is located at x=100, which is moved closer to the detector 120. In FIGS. 4D and 4G, the stop is located at x=210 on the other side of the lens 110.

FIG. 4A was produced with the smallest aperture diameter (d=1), essentially a pinhole. FIGS. 4B-4D were produced with a larger aperture diameter of d=10 at various values of x. FIGS. 4E-4G were produced with the largest aperture diameter of d=25 at various values of x. In all cases, the lens was focused on the green square 150B. In the resulting images generated by backwards ray tracing, the image of the green square 150B always appeared sharp, as would be expected. However, the sharpness of the red square 150A varied depending on the depth of field of the system. For the pinhole aperture, the system had a large depth of field and the red square 150A was also in focus. For larger apertures, the depth of field decreased and the red square 150A fell out of focus.

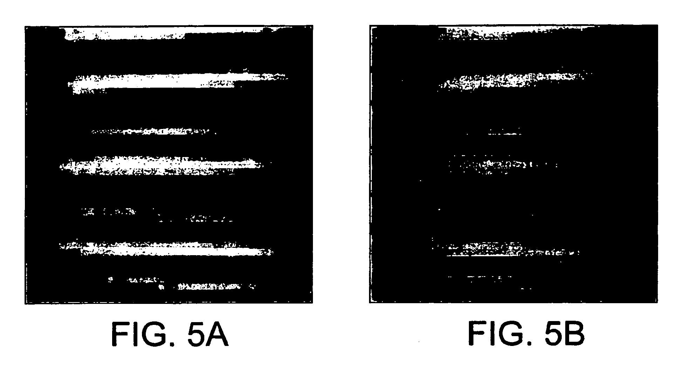

FIGS. 5A-5B show the results of a different simulation in which pseudo-barcodes were used as the source in FIG. 3. The barcodes were tipped 45° (FIG. 5A) and 60° (FIG. 5B) in depth, away from the principal axis (line of sight) of the lens. In both FIGS. 5A and 5B, the left sides of the barcodes are closer to the viewer and the right sides are farther away. Note that due to the limited depth of field of the optical system, the sections closer and farther away are blurry. In this example, each pixel was based on roughly fifty rays from a simulated Gaussian point source, using Monte Carlo randomization of direction, within a cone subtended by the lens.

FIG. 3 shows a static source model but more complex models can also be used. For example, the source model may account for variations due to motion of the source, variations in a position of the source, variations in illumination of the source or noise variations in the source, to name a few. The spatial model of the source may have a statistical component to account for variability. The source can also be a class of sources (e.g., the class of barcodes). The spatial model could include multiple members of the class (e.g., a representative sampling of barcodes). In one approach, the model of the source includes a three-dimensional computer-generated model. Computer-generated models are often ray traced in order to render them. The same techniques can be used to carry out the backwards ray trace.

In most scenarios, the universe of all possible source objects to be imaged is naturally constrained by the application. For instance, this universe of objects may be tightly constrained as in the case of a barcode reading system, or rather unconstrained as in the case of a general purpose consumer camera. Be it large or small, the boundedness of this space can offer important prior information for the system designer. For instance, knowing that the source is a binary level scanned document provides powerful constraints and information to the digital image processing subsystem in particular where one might implement the nonlinear stage of binarization of the final digital image.

Information used to produce the spatial model of the source 150 may take several forms. The designer may possess detailed information about the three-dimensional geometry of the scene under consideration. Such information is commonly used to constrain the optics used in an imaging system. For instance, the optical designer typically desires to match the depth of focus of the optics with the expected depth of field of the scene in question to produce an image free from defocus related optical aberrations. The optical designer, however, typically satisfies only very generic geometric constraints such as the bounding box of expected object depth. With more specific depth related information at his/her disposal, the system designer is capable of developing better designs for imaging systems.

The spatially varying luminance properties of the scene may also be used to model the source 150. For instance, when dealing with text or textual document images, the designer may have information relating to the language of the imaged text, or that the signal represents a binary source, etc. Statistical models of the source might be extracted from a corpus of scanned documents representative of those to be scanned by the fielded system or modeled from physical first principles. This knowledge can be especially useful in designing the digital image processing subsystem. Many image processing techniques rely on prior information regarding the contents of the scene under observation as imaged by an idealized imaging system. Note that this prior information may be derived from physical first principles or learned from a large collection of data. In one approach, a high quality imaging system captures data under a variety of imaging scenarios in an effort to learn the underlying statistics of the scene.

Moving now to the optical subsystem 110, the overall goal of a traditional lens designer is to choose the set of optical design parameters $\theta_o$ to produce an optical subsystem with minimal wavefront error while satisfying other constraints such as minimum element edge width, minimum element spacing, etc. Since aberrations cannot be removed completely, the job of the traditional lens designer is to find a good balance between the different aberrations for the given application, costs, and related constraints. To accomplish this, the lens designer typically uses optical design software to vary the optical design in a manner that directly minimizes a merit function based on the aberrations or wavefront error.

Unfortunately, aberrations can be reduced only so much in a lens system of a given complexity (e.g., limited to a specific number of elements). However, in many cases, certain aberrations are more correctable by the digital image processing subsystem than others. The end-to-end design approach typically takes advantage of this, while the traditional lens design approach typically does not. To oversimplify for purposes of illustrating this point, assume that all aberrations can be rated according to their correctability via image processing techniques. The aberrations at the correctable end of the scale can be mostly or fully compensated by the digital image processing subsystem while those at the non-correctable end of the scale cannot. In a traditional design, the distinction between correctable and non-correctable aberrations is not recognized. Instead, the optical subsystem is designed to create an intermediate optical image of high image quality. Thus, for example, the lens system may be designed to reduce correctable and non-correctable aberrations equally to some moderate level. During subsequent digital image processing, the correctable aberrations are further reduced to a lower level digitally, but the non-correctable aberrations remain at their moderate level. Furthermore, correctability can vary significantly depending on the characteristics of the source, which typically is not accounted for in traditional approaches to designing optical subsystems.

In contrast, in the end-to-end design approach, it is recognized that the correctable aberrations can be compensated for by the digital image processing subsystem. Thus, the optical subsystem emphasizes reduction of those aberrations which are difficult to correct during subsequent image processing. The intermediate optical image may contain a lower level of non-correctable aberrations and a higher level of correctable aberrations. As a result, the intermediate optical image may be of lower image quality due to the higher level of these correctable aberrations. However, these are subsequently reduced by the digital image processing subsystem to a lower level so that the overall electro-optic imaging system has high performance. The end-to-end approach allows the designer to allocate correction between the various subsystems. For example, if digital image processing is inexpensive compared to lenses, the designer may select a simple but low performance optical subsystem followed by a complicated digital image processing subsystem.

Consider now the digital image processing subsystem 130. There exists a wide range of possible image processing techniques for improving performance of the electro-optic imaging system and it is not feasible to discuss here all possible image processing techniques. In the following example, the digital image processing subsystem uses techniques aimed at restoring the signal degraded by the point spread function (PSF). Furthermore, the restoration problem is approached from an estimation theoretic perspective in this example.

In general, there exists a wide range of possible restoration approaches that can be used to restore a signal s (e.g., the actual source 150 in FIG. 3) from the observed signal y (e.g., the estimated image based on backwards ray tracing), ranging from simple linear filters to iterative nonlinear techniques. The following examples describe certain techniques that each seek an optimum to well-defined performance measures and that exhibit predictable performance. In addition, while the following examples are based on post-processing performance metrics that compare ideal and actual images, other implementations might seek to optimize some empirical or nonanalytic measure, for instance the recognition accuracy in optical character recognition or in a barcode reader.

One class of restoration techniques is based on linear processes. These are generally simple to analyze formally and easy to implement in an actual system. In the linear framework, the original signal is estimated using a linear operator of the form:

$$\hat{s} = Ry. \qquad (1)$$

In this example, the minimum mean square error (MMSE) is used as the Lyapunov or target function. Referring to FIG. 1, the electro-optic imaging system 100 is optimized such that the sum of the squared deviations between an ideal image 155 and the actual digital image 180 is minimized. Here, the ideal image is the bandlimited, noise-free digital image that would arise from a theoretical pinhole imaging system with sufficient illumination and in the absence of diffraction. Thus, the goal is to find the filter matrix **R** satisfying

$$\min_{R} \varepsilon_{n,s}[||Ry-s||^2], \qquad (2)$$

where the subscript of the expectation operator $\varepsilon$ represents an expectation taken over the random noise n and the (assumed) stationary random signal **s**. The MMSE filtering approach requires no assumptions about the statistical properties of the underlying signal or noise models other than their respective means and covariance structures. Under the assumption that the noise and the signal are uncorrelated, the ideal linear restoration matrix is given by

$$R=C_sH^T[HC_sH^T+C_n]^{-1} \qquad (3)$$

where $C_s$ and $C_n$ represent the covariance matrices of the signal and the noise respectively. The per-pixel MSE performance is predicted by such a system using

$$1/N \ Tr[(RH-I)C_s(RH-I)^T+RC_nR]. \qquad (4)$$

where Tr[ ] is the trace operator and N is the number of pixels in the entire image.

Utilizing nonlinear restoration techniques widens the space of possible post-processing performance metrics. For instance, the class of nonlinear iterative restoration techniques is often statistically motivated, such as Maximum Likelihood (ML) or Maximum A-Posteriori (MAP). Such approaches have the benefit of being asymptotically unbiased with minimum error variance, which are stronger properties than MMSE.

For instance, assuming that the signal s is a deterministic, yet unknown signal, the ML estimate of the signal satisfies

$$\hat{s}=\max_{s} L(y|s), \qquad (5)$$

where L(**y**|**s**) is the statistical likelihood function for the observed data. Since it is assumed in this particular example that the additive noise in the signal model is Gaussian, the ML cost function reduces to a least squares (LS) objective function

$$\hat{s}=\min_{s}||y-Hs||^2 \qquad (6)$$

$$=[H^TH]^{-1}H^Ty. \qquad (7)$$

For signals of large dimension (i.e., large numbers of pixels), it may become prohibitive to explicitly construct these matrices. Often, iterative methods are utilized to minimize Eqn. 6 eliminating the need to explicitly construct the matrices. In many situations (for instance severe defocus), the operator **H** is rank-deficient leading to unstable solutions. In such cases, additional information, such as source power spectral density information or source functional smoothness, can be used to constrain the space of solutions.

When statistical prior information exists about the unknown signal, the MAP cost function becomes

$$\hat{s}=\min_{s}||y-H(\tau)s||^2+\psi C(s) \qquad (8)$$

where C(s) represents the prior information about the unknown signal and □represents a Lagrangian-type relative weighting between the data objective function and prior information. Cost functions of this form may not permit analytic solutions as in Eqn. 7. The Cramer-Rao inequality could be used to bound as well as to predict asymptotically the nonlinear estimator performance.

Although the detailed description contains many specifics, these should not be construed as limiting the scope of the invention but merely as illustrating different examples and aspects of the invention. It should be appreciated that the scope of the invention includes other embodiments not discussed in as much detail above. Various other modifications, changes and variations which will be apparent to those skilled in the art may be made in the arrangement, operation and details of the method and apparatus of the present invention disclosed herein without departing from the scope of the invention as defined in the appended claims.

**Claims**

1.  A computer program comprising instructions that, when executed on a computer, cause a processor to design an electro-optic imaging system for imaging a source, the electro-optic imaging system including an optical subsystem, a detector subsystem and a digital image processing subsystem, **characterized in that** the method comprises:

    modeling propagation of signal from the source through the optical subsystem, the detector subsystem and the digital image processing subsystem, where the step of modeling propagation includes:

    tracing rays from the detector subsystem backwards through the optical subsystem to the source; and modeling propagation of signal from the source to the detector subsystem based on the backwards ray trace and also based on a spatial model of the source;

    calculating a post-processing performance metric representing the performance of the modelled electro-optic imaging system in imaging the source, after processing by the digital image processing subsystem, the post-processing performance metric being a function of the modeled propagation; and
    designing the optical subsystem based directly on the post-processing performance metric by selecting parameters of the optical subsystem to directly optimize the post-processing performance metric.

2.  The computer program of claim 1 where the spatial model of the source is a three-dimensional model of the source.

3.  The computer program of claim 2 where the three-dimensional model of the source is a computer-generated model of the source.

4.  The computer program of claim 1, 2 or 3 where the spatial model of the source accounts for at least one of:

    variations due to motion of the source;
    variations in a position of the source;
    variations in illumination of the source; and
    noise variations in the source.

5.  The computer program of claim 1, 2, 3 or 4 where the source is binary and the spatial model of the source accounts for the binary nature of the source.

6.  The computer program of any one of the preceding claims where the spatial model includes a statistical model accounting for variations in the source.

7.  The computer program of any one of the preceding claims where:

    the detector subsystem includes an array of detectors, the detectors in the array producing pixels of an image; and
    the step of modeling propagation includes, for detector(s) that correspond to a pixel in the image:

    tracing rays from the detector(s) backwards through the optical subsystem to the source; and
    estimating the pixel produced by the detector(s) based on the backwards ray trace and on a spatial model of the source.

8.  The computer program of claim 7 where the step of estimating the pixel produced by the detector(s) includes:

    determining source points intersected by rays traced backwards from the detector(s), based on the spatial model of the source;
    determining image contributions from the intersected source points; and
    combining the image contributions to estimate the pixel produced by the detector(s).

9.  The computer program of claim 8 where the step of combining the image contributions includes:

forming a weighted average of the image contributions.

10. The computer program of claim 7 or 8 where the spatial model includes a statistical model account for variations in the source, and the step of estimating the pixel produced by the detector(s) is based on the statistical model.

11. The computer program of any one of the preceding claims where the step of designing the optical subsystem is performed without requiring a direct optimization of an image quality of an intermediate optical image of the source formed by the optical subsystem.

12. The computer program of any one of the preceding claims where the post-processing performance metric is a mean square error between an ideal image of the source and an image predicted by the modeled propagation of the source through the optical subsystem, the detector subsystem and the digital image processing subsystem.

13. The computer program of any one of the preceding claims where the designed optical subsystem forms an intermediate optical image that is significantly worse in image quality than that formed by an optical subsystem designed to optimize the image quality of the intermediate optical image.

14. The computer program of any one of the preceding claims where the step of designing the optical subsystem is subject to one or more non-imaging constraints.

15. The computer program of any one of the preceding claims where the step of designing the optical subsystem comprises designing the optical subsystem and the digital image processing subsystem together, not sequentially, based directly on the post-processing performance metric.

16. The computer program of claim 15 where the step of designing the optical subsystem and the digital image processing subsystem together is limited to linear digital image processing subsystems.

17. A method for designing an electro-optic imaging system for imaging a source, the electro-optic imaging system including an optical subsystem, a detector subsystem and a digital image processing subsystem, **characterized in that** the method comprises:

> modeling propagation of signal from the source through the optical subsystem, the detector subsystem and the digital image processing subsystem, where the step of modeling propagation includes:

>> tracing rays from the detector subsystem backwards through the optical subsystem to the source; and modeling propagation of signal from the source to the detector subsystem based on the backwards ray trace and also based on a spatial model of the source;
>> calculating a post-processing performance metric representing the performance of the modelled electro-optic imaging system in imaging the source, after processing by the digital image processing subsystem, the post-processing performance metric being a function of the modeled propagation;
>> designing the optical subsystem based directly on the post-processing performance metric by selecting parameters of the optical subsystem to directly optimize the post-processing performance metric ; and
>> manufacturing an electro-imaging system based on the result of the designing step.

**Patentansprüche**

1. Computerprogramm, das Befehle enthält, die bewirken, wenn sie auf einem Computer ausgeführt werden, dass ein Prozessor ein elektrooptisches Bilderzeugungssystem zum Abbilden einer Quelle entwirft, wobei das elektrooptische Bilderzeugungssystem ein optisches Teilsystem, ein Detektor-Teilsystem und ein digitales Bildverarbeitungs-Teilsystem enthält, **dadurch gekennzeichnet, dass** das Verfahren umfasst:

> Modellieren der Ausbreitung eines Signals von der Quelle durch das optische Teilsystem, das Detektor-Teilsystem und das digitale Bildverarbeitungs-Teilsystem, wobei der Schritt zum Modellieren der Ausbreitung umfasst:

>> Verfolgen von Strahlen von dem Detektor-Teilsystem rückwärts durch das optische Teilsystem zu der Quelle; und
>> Modellieren der Ausbreitung eines Signals von der Quelle zu dem Detektor-Teilsystem anhand der Rückwärts-Strahlverfolgung und außerdem anhand eines räumlichen Modells der Quelle;

Berechnen eines Nachverarbeitungs-Leistungsmaßes, das die Leistung des modellierten elektrooptischen Bilderzeugungssystems beim Abbilden der Quelle nach einer Verarbeitung durch das digitale Bildverarbeitungs-Teilsystem repräsentiert, wobei das Nachverarbeitungs-Leistungsmaß eine Funktion der modellierten Ausbreitung ist; und

Entwerfen des optischen Teilsystems direkt anhand des Nachverarbeitungs-Leistungsmaßes durch Auswählen von Parametern des optischen Teilsystems, um das Nachverarbeitungs-Leistungsmaß direkt zu optimieren.

2. Computerprogramm nach Anspruch 1, wobei das räumliche Modell der Quelle ein dreidimensionales Modell der Quelle ist.

3. Computerprogramm nach Anspruch 2, wobei das dreidimensionale Modell der Quelle ein computererzeugtes Modell der Quelle ist.

4. Computerprogramm nach Anspruch 1, 2 oder 3, wobei das räumliche Modell der Quelle
Variationen infolge einer Bewegung der Quelle; und/oder
Variationen einer Position der Quelle; und/oder
Variationen bei der Beleuchtung der Quelle; und/oder
Störungsvariationen in der Quelle
berücksichtigt.

5. Computerprogramm nach Anspruch 1, 2, 3 oder 4, wobei die Quelle binär ist und das räumliche Modell der Quelle das binäre Wesen der Quelle berücksichtigt.

6. Computerprogramm nach einem der vorhergehenden Ansprüche, wobei das räumliche Modell ein statistisches Modell enthält, das Variationen in der Quelle berücksichtigt.

7. Computerprogramm nach einem der vorhergehenden Ansprüche, wobei:

das Detektor-Teilsystem ein Array aus Detektoren enthält, wobei die Detektoren in dem Array Bildelemente eines Bildes erzeugen; und
der Schritt zum Modellieren der Ausbreitung für Detektor(en), die einem Bildelement in dem Bild entsprechen, Folgendes enthält:

Verfolgen von Strahlen von dem (den) Detektor(en) durch das optische Teilsystem zurück zur Quelle; und
Schätzen des Bildelements, das durch den (die) Detektor(en) erzeugt wird, anhand der Rückwärts-Strahlverfolgung und eines räumlichen Modells der Quelle.

8. Computerprogramm nach Anspruch 7, wobei der Schritt zum Schätzen des durch den (die) Detektor(en) erzeugten Bildelements umfasst:

Bestimmen von Quellenpunkten, die durch Strahlen geschnitten werden, die von dem (den) Detektor(en) rückwärts verfolgt werden, anhand des räumlichen Modells der Quelle;
Bestimmen von Bildbeiträgen von den geschnittenen Quellenpunkten; und
Kombinieren der Bildbeiträge, um das durch den (die) Detektor(en) erzeugte Bildelement zu schätzen.

9. Computerprogramm nach Anspruch 8, wobei der Schritt zum Kombinieren der Bildbeiträge umfasst:

Bilden eines gewichteten Mittelwerts der Bildbeiträge.

10. Computerprogramm nach Anspruch 7 oder 8, wobei das räumliche Modell ein statistisches Modell enthält, das Variationen in der Quelle berücksichtigt, und der Schritt zum Schätzen des durch den (die) Detektor(en) erzeugten Bildelements anhand des statistischen Modells erfolgt.

11. Computerprogramm nach einem der vorhergehenden Ansprüche, wobei der Schritt zum Entwerfen des optischen Teilsystems ausgeführt wird, ohne dass eine direkte Optimierung einer Bildqualität eines optischen Zwischenbilds der Quelle, das durch das optische Teilsystem gebildet wird, erforderlich ist.

**12.** Computerprogramm nach einem der vorhergehenden Ansprüche, wobei das Nachverarbeitungs-Leistungsmaß ein mittlerer quadratischer Fehler zwischen einem idealen Bild der Quelle und einem Bild, das durch die modellierte Ausbreitung der Quelle durch das optische Teilsystem, das Detektor-Teilsystem und das digitale Bildverarbeitungs-Teilsystem vorhergesagt wird, ist.

**13.** Computerprogramm nach einem der vorhergehenden Ansprüche, wobei das entworfene optische Teilsystem ein optisches Zwischenbild bildet, das in der Bildqualität wesentlich schlechter ist als jenes, das durch ein optisches Teilsystem gebildet wird, das entworfen ist, um die Bildqualität des optischen Zwischenbilds zu optimieren.

**14.** Computerprogramm nach einem der vorhergehenden Ansprüche, wobei der Schritt zum Entwerfen des optischen Teilsystems Gegenstand einer oder mehrerer Nicht-Bilderzeugungs-Randbedingungen ist.

**15.** Computerprogramm nach einem der vorhergehenden Ansprüche, wobei der Schritt zum Entwerfen des optischen Teilsystems das gemeinsame Entwerfen des optischen Teilsystems und des digitalen Bildverarbeitungs-Teilsystems, nicht nacheinander direkt anhand des Nachverarbeitungs-Leistungsmaßes umfasst.

**16.** Computerprogramm nach Anspruch 15, wobei der Schritt des gemeinsamen Entwerfens des optischen Teilsystems und des digitalen Bildverarbeitungs-Teilsystems auf lineare digitale Bildverarbeitungs-Teilsysteme beschränkt ist.

**17.** Verfahren zum Entwerfen eines elektrooptischen Bilderzeugungssystems zum Abbilden einer Quelle, wobei das elektrooptische Bilderzeugungssystem ein optisches Teilsystem, ein Detektor-Teilsystem und ein digitales Bildverarbeitungs-Teilsystem enthält, **dadurch gekennzeichnet, dass** das Verfahren Folgendes umfasst:

Modellieren der Ausbreitung eines Signals von der Quelle durch das optische Teilsystem, das Detektor-Teilsystem und das digitale Bildverarbeitungs-Teilsystem, wobei der Schritt zum Modellieren der Ausbreitung Folgendes enthält:

Verfolgen von Strahlen von dem Detektor-Teilsystem rückwärts durch das optische Teilsystem zu der Quelle; und
Modellieren der Ausbreitung eines Signals von der Quelle zu dem Detektor-Teilsystem anhand der Rückwärts-Strahlverfolgung und außerdem anhand eines räumlichen Modells der Quelle;

Berechnen eines Nachverarbeitungs-Leistungsmaßes, das die Leistung des modellierten elektrooptischen Bilderzeugungssystems beim Abbilden der Quelle nach einer Verarbeitung durch das digitale Bildverarbeitungs-Teilsystem repräsentiert, wobei das Nachverarbeitungs-Leistungsmaß eine Funktion der modellierten Ausbreitung ist;
Entwerfen des optischen Teilsystems direkt anhand des Nachverarbeitungs-Leistungsmaßes durch Auswählen von Parametern des optischen Teilsystems, um das Nachverarbeitungs-Leistungsmaß direkt zu optimieren; und
Herstellen eines Elektro-Bilderzeugungssystems anhand des Ergebnisses des Entwurfsschritts.

**Revendications**

**1.** Programme d'ordinateur comprenant des instructions qui, lorsqu'elles sont exécutées par un ordinateur, amènent un processeur à concevoir un système de formation d'image électro-optique pour former l'image d'une source, le système de formation d'image électro-optique comprenant un sous-système optique, un sous-système de détecteurs et un sous-système de traitement d'image numérique, **caractérisé en ce que** le procédé consiste à :

modéliser la propagation de signal à partir de la source à travers le sous-système optique, le sous-système de détecteurs et le sous-système de traitement d'image numérique, dans lequel l'étape de modélisation de la propagation consiste à :

tracer les rayons à partir du sous-système de détecteurs vers l'arrière à travers le sous-système optique vers la source ; et
modéliser la propagation de signal à partir de la source vers le sous-système de détecteurs sur la base de la trace des rayons vers l'arrière et également sur la base d'un modèle spatial de la source ;
calculer une métrique de performance post-traitement représentant la performance du système de formation d'image électro-optique modélisé pour former l'image de la source, après un traitement par le sous-système de traitement d'image numérique, la métrique de performance post-traitement étant fonction de la propagation modélisée ; et

concevoir le sous-système optique directement sur la base de la métrique de performance post-traitement en sélectionnant les paramètres du sous-système optique pour optimiser directement la métrique de performance post-traitement.

**2.** Programme d'ordinateur selon la revendication 1, dans lequel le modèle spatial de la source est un modèle tridimensionnel de la source.

**3.** Programme d'ordinateur selon la revendication 2, dans lequel le modèle tridimensionnel de la source est un modèle généré par ordinateur de la source.

**4.** Programme d'ordinateur selon la revendication 1, 2 ou 3, dans lequel le modèle spatial de la source prend en compte au moins l'une :

de variations dues au mouvement de la source ;
de variations d'une position de la source ;
de variations du rayonnement de la source ; et
de variations du bruit dans la source.

**5.** Programme d'ordinateur selon la revendication 1, 2, 3 ou 4, dans lequel la source est binaire et le modèle spatial de la source prend en compte la nature binaire de la source.

**6.** Programme d'ordinateur selon l'une quelconque des revendications précédentes, dans lequel le modèle spatial comprend un modèle statistique prenant en compte des variations dans la source.

**7.** Programme d'ordinateur selon l'une quelconque des revendications précédentes, dans lequel :

le sous-système de détecteurs comprend un réseau de détecteurs, les détecteurs dans le réseau produisant des pixels d'une image ; et
l'étape de modélisation de la propagation consiste, pour un ou des détecteurs qui correspondent à un pixel dans l'image, à :

tracer les rayons à partir du ou des détecteurs vers l'arrière à travers le sous-système optique vers la source ; et
estimer le pixel produit par le ou les détecteurs sur la base de la trace des rayons vers l'arrière et d'un modèle spatial de la source.

**8.** Programme d'ordinateur selon la revendication 7, dans lequel l'étape d'estimation du pixel produit par le ou les détecteurs consiste à :

déterminer des points de source croisés par les rayons tracés vers l'arrière à partir du ou des détecteurs, sur la base du modèle spatial de la source ;
déterminer des contributions d'image à partir des points de source croisés ; et
combiner les contributions d'image pour estimer le pixel produit par le ou les détecteurs.

**9.** Programme d'ordinateur selon la revendication 8, dans lequel l'étape de combinaison des contributions d'image consiste à :

former une moyenne pondérée des contributions d'image.

**10.** Programme d'ordinateur selon la revendication 7 ou 8, dans lequel le modèle spatial comprend un modèle statistique qui prend en compte des variations dans la source, et l'étape d'estimation du pixel produit par le ou les détecteurs est basée sur le modèle statistique.

**11.** Programme d'ordinateur selon l'une quelconque des revendications précédentes, dans lequel l'étape de conception du sous-système optique est effectuée sans nécessiter une optimisation directe d'une qualité d'image d'une image optique intermédiaire de la source formée par le sous-système optique.

**12.** Programme d'ordinateur selon l'une quelconque des revendications précédentes, dans lequel la métrique de performance post-traitement est une erreur quadratique moyenne entre une image idéale de la source et une image prédite par la propagation modélisée de la source à travers le sous-système optique, le sous-système de détecteurs et le sous-système de traitement d'image numérique.

**13.** Programme d'ordinateur selon l'une quelconque des revendications précédentes, dans lequel le sous-système optique conçu forme une image optique intermédiaire qui a une qualité d'image beaucoup plus mauvaise que celle formée par un sous-système optique conçu pour optimiser la qualité d'image de l'image optique intermédiaire.

**14.** Programme d'ordinateur selon l'une quelconque des revendications précédentes, dans lequel l'étape de conception du sous-système optique est soumise à une ou plusieurs contraintes de non formation d'image.

**15.** Programme d'ordinateur selon l'une quelconque des revendications précédentes, dans lequel l'étape de conception du sous-système optique consiste à concevoir le sous-système optique et le sous-système de traitement d'image numérique en même temps, non pas séquentiellement, directement sur la base de la métrique de performance post-traitement.

**16.** Programme d'ordinateur selon la revendication 15, dans lequel l'étape de conception du sous-système optique et du sous-système de traitement d'image numérique en même temps est limitée aux sous-systèmes de traitement d'image numérique linéaire.

**17.** Procédé pour concevoir un système de formation d'image électro-optique pour former l'image d'une source, le système de formation d'image électro-optique comprenant un sous-système optique, un sous-système de détecteurs et un sous-système de traitement d'image numérique, **caractérisé en ce que** le procédé consiste à :

modéliser une propagation de signal à partir de la source à travers le sous-système optique, le sous-système de détecteurs et le sous-système de traitement d'image numérique, dans lequel l'étape de modélisation de propagation consiste à :

tracer les rayons à partir du sous-système de détecteurs vers l'arrière à travers le sous-système optique vers la source ; et

modéliser une propagation de signal de la source vers le sous-système de détecteurs sur la base de la trace des rayons vers l'arrière et également sur la base d'un modèle spatial de la source ;

calculer une métrique de performance post-traitement représentant la performance du système de formation d'image électro-optique modélisé lors de la formation d'image de la source, après un traitement par le sous-système de traitement d'image numérique, la métrique de performance post-traitement étant fonction de la propagation modélisée ;

concevoir le sous-système optique directement sur la base de la métrique de performance post-traitement en sélectionnant les paramètres du sous-système optique pour optimiser directement la métrique de performance post-traitement ; et

fabriquer un système d'électro-formation d'image sur la base du résultat de l'étape de conception.

Costs 170

$K_o(\theta_o)$    $K_d(\theta_d)$    $K_i(\theta_i)$

100

Source 150 →

| Optics 110 | Detector 120 | Digital Image Processing 130 |

→ Digital Image 180

$\theta_o$    $\theta_d$    $\theta_i$
System Parameters

Application-dependent Ideal Representation 155

Performance Metric 190

FIG. 1

```
┌─────────────────────────┐
│           210           │
│  Generate spatial model │
│        for source       │
└─────────────────────────┘
             │
             ▼
┌─────────────────────────┐
│           220           │
│   Identify design space │
└─────────────────────────┘
             │
             ▼
┌─────────────────────────┐
│           230           │
│  Define post-processing │
│    performance metric   │
└─────────────────────────┘
             │
             ▼
┌─────────────────────────┐
│           240           │
│ Design optical subsystem│
└─────────────────────────┘
```

FIG. 2

FIG. 3

EPO - DG 1

2 4. 01. 2007

(67)

pinhole
d=1,x=145

FIG. 4A

d=10,x=100

FIG. 4B

d=25,x=100

FIG. 4E

d=10,x=145

FIG. 4C

d=25,x=145

FIG. 4F

d=10,x=210

FIG. 4D

d=25,x=210

FIG. 4G

FIG. 5A

FIG. 5B

**REFERENCES CITED IN THE DESCRIPTION**

**Patent documents cited in the description**

- US 20050197809 A1

- US 20030169944 A1